Europäisches Patentamt

European Patent Office

Office européen des brevets

(19)

(11) Veröffentlichungsnummer: **0 268 958 B1**

# EUROPÄISCHE PATENTSCHRIFT

(12)

(45) Veröffentlichungstag der Patentschrift: **06.03.91**

(51) Int. Cl.5: **C09K 3/10**

(21) Anmeldenummer: **87116802.7**

(22) Anmeldetag: **13.11.87**

(54) Verfahren zum Herstellen eines Dichtungsmaterials sowie nach diesem Verfahren hergestelltes Dichtungsmaterial.

(30) Priorität: **13.11.86 DE 3638701**

(43) Veröffentlichungstag der Anmeldung:
**01.06.88 Patentblatt 88/22**

(45) Bekanntmachung des Hinweises auf die
Patenterteilung:
**06.03.91 Patentblatt 91/10**

(84) Benannte Vertragsstaaten:
**AT BE CH DE FR IT LI NL SE**

(56) Entgegenhaltungen:
**DE-C- 2 611 523**
**GB-A- 1 155 270**

(73) Patentinhaber: **Martin Merkel GmbH & Co. KG**
**Sanitasstrasse 17-21**
**W-2102 Hamburg 93(DE)**

(72) Erfinder: **Bock, Klaus-Dieter, Dipl.-Ing.**
**Triftstrasse 67b**
**W-2100 Hamburg 90(DE)**
Erfinder: **Fassbender, Hagen**
**Reinsdorfweg 2a**
**W-2102 Hamburg 93(DE)**
Erfinder: **Jonas, Reinhold, Dr.-Ing.**
**Grotelerweg 63**
**W-2100 Hamburg 90(DE)**

(74) Vertreter: **Glawe, Delfs, Moll & Partner Patent-**
**anwälte**
**Postfach 26 01 62 Liebherrstrasse 20**
**W-8000 München 26(DE)**

EP 0 268 958 B1

**Beschreibung**

Die Erfindung bezieht sich auf ein Verfahren zum Herstellen eines Dichtungsmaterials, insbesondere für Flachdichtungen, aus einem nachgiebigen Fluorkunststoff mit einem Gehalt von 50 Gew .-% an porenbildendem, teilchenförmigem Füllstoff. Sie betrifft ferner eine Dichtung, die aus dem nach diesem Verfahren herstellbaren.Material besteht. Die Dichtwirkung einer Flachdichtung beruht auf ihrer Fähigkeit, sich den Flächen, zwischen die sie eingespsannt ist, unter dem Einspanndruck weitgehend formgleich anzupassen. Diese Anpassung soll auch dann aufgrund einer elastischen Rückstellfähigkeit des Flachdichtungsmaterials erhalten bleiben, wenn die Distanz zwischen den Einspannflächen aufgrund mechanischer oder thermischer Einwirkungen wechselt. Die Anpassung soll unter möglichst geringen Spannkräften zustande kommen können. Schließlich soll das Material gegenüber dem abzudichtenden Medium weitgehend inert und undurchlässig sein.

Reines Polytetrafluorethylen genügt zwar den chemischen Anforderungen, hat aber für viele Anwendungszwecke ein unzureichendes Rückstellvermögen und eine zu geringe Formbeständigkeit. Durch Modifikation des Materials mittels eines Anteils an schmelzbaren Fluorkunststoffen lassen sich die Formbeständigkeit und das Rückstellvermögen verbessern.

Bekannt ist ferner ein unter dem Warenzeichen "Gylon Standard" vertriebenes Flachdichtungsmaterial, das aus mit Silicium-dioxyd gefülltem Polytetrafluorethylen besteht. Es weist eine verhältnismäßig hohe Festigkeit auf und verlangt daher hohe Einspannkräfte, die es für empfindliche Apparaturen ungeeignet machen. Sein Rückstellvermögen ist zwar besser als das von PTFE, aber für viele Anwendungszwecke ist ein größeres Rückstellvermögen erwünscht. Ferner ist unter dem Warenzeichen "Gylon Blue" ein Flachdichtungsmaterial auf dem Markt, welches in einem modifizierten PTFE einen von winzigen Glashohlkugeln gebildeten Füllstoff enthält. Dies Material ist weicher als das vorerwähnte, was möglicherweise damit zusammenhängt, daß die Hohlkugeln unter der Dichtkraft teilweise zerstört werden und dadurch Porenvolumen freigeben. Die elastischen Kräfte des Kunststoffmaterials sowie das in den Poren durch die Dichtkraft komprimierte Gas erzeugen elastische Rückstellkräfte, wobei diese aber, soweit sie auf das komprimierte Gas zurückgehen, nach lassen, falls das Gas im Laufe der Zeit herausdiffundiert. Seine Belastungsgrenze liegt nach Herstellerangaben niedrig. - Schließlich ist unter dem Warenzeichen "Gylon Black" auch ein Flachdichtungsmaterial auf Fluorkunststoffbasis bekannt, das Graphit als Füllstoff enthält. Sein Rückstellvewrmögen ist kaum größer als das von "Gylon Standard".

Es entspricht einem anderen bekannten Flachdichtungsmaterial (GB-A 1155270), das aus PTFE mit Graphit als Füllstoff durch Freisintern hergestellt ist und sich durch erhöhte Formbeständigkeit gegenüber reinem PTFE unter Belastung auszeichnet. Über sein Rückstellvermögen ist nichts bekannt; es dürfte dem von "Gylon Black" gleichen.

Neben Flachdichtungen aus Fluorkunststoff, deren Eigenschaften von der überwiegenden Kunststoffkomponente bestimmt sind, gibt es solche auf der Basis von gebiähtem Graphit (DE-PS 12 53 130, DE-OS 24 41 602, DE-OS 32 44 595). Graphitpartikeln lassen sich durch Schockverdampfung von zwischen die Graphitschichten eingelagerten Fremdstoffen auf ein Vielfaches ihres ursprünglichen Volumens aufblähen. Daraus hergestellte Preßkörper haben·eine quer zur Preßrichtung verlaufende Schichtstruktur mit guter Elastizität und sind auch für Flachdichtungen geeignet. Bestehen sie ausschließlich aus gepreßtem Graphit, sind sie jedoch schlecht handhabbar wegen ihrer geringen mechanischen Festigkeit und Bruchanfälligkeit. Diesen Mangel kann man verringern, wenn auch nicht ganz ausschließen, durch Zusatz von organischen Bindemitteln, die in geringen Mengen von wenigen Gewichtsprozenten zugesetzt werden, damit sie die elastischen Eigenschaften des Graphitgefüges nicht verändern.

Bekannt sind auch nach diesem Prinzip aufgebaute Dichtungsringe (DE-PS 26 11 523), die aus expandiertem und gepreßtem Graphitpulver bestehen, in welchem die Graphitpartikeln unter Belassung von Hohlräumen durch Brücken aus Tetrafluorethylen-Perfluorpropylen-Copolymerisat miteinander verbunden sind. Neben einer Verminderung der Bruchanfälligkeit verleihen die Hohlräume dem Produkt eine die selbstschmierende Eigenschaft des Graphits ergänzende Ölspeicherfähigkeit und prädestinieren es damit für dynamische Dichtungen. Für statische Dichtungen, insbesondere Flachdichtungen, ist das Material jedoch wegen seiner durch die Hohlräume verursachten Durchlässigkeit nicht geeignet.

Der Erfindung liegt die Aufgabe zugrunde, das eingangs genannte Dichtungsmaterial, das auf der Basis von Fluorkunststoff beruht, zu verbessern.

Die erfindungsgemäße Lösung besteht darin, daß als Füllstoff ein Expandat von Graphit oder blattstrukturiertem Silikat verwendet wird, und die nicht oder nur schwach vorgepreßte Mischung mit dem Kunststoff erwärmt und im erweichten Zustand gepreßt wird.

Durch die Wahl des Fluorkunststoffs als wesensbestimmende Grundmasse der Dichtung, in deren Matrix die Füllstoffpartikeln lediglich eingebettet sind, sichert sich die Erfindung die chemischen und

2

handhabungsmechanischen Vorteile der bekannten PTFE-Dichtungen. Durch die Verwendung von expandiertem Graphit als Füllstoff enthält dieser jedoch überraschend vorteilhafte Eigenschaften hinsichtlich seiner Anpassungsfähigkeit und seines elastischen Rückstellvermögens beim Einsatz als Flachdichtung. Die einzelnen Graphitpartikeln wirken als Federkörper innerhalb der Kunststoffmatrix, wodurch diese unter den Einspannkräften nachgeben und sich der Form der Einspannflächen anpassen kann, wobei die Graphitpartikeln aufgrund ihrer Kristallstruktur rückfedernd wirken.

Eine besondere Eigenart der erfindungsgemäß hergestellten Produkte besteht darin, daß die Füllstoffpartikeln von dem Kunststoff im wesentlichen vollständig, d.h. im allgemeinen porenfrei, eingeschlossen und innig mit ihm verbunden sind, obwohl sie vergleichsweise wenig zusammengedrückt sind. Dies ist das Ergebnis der Druckausübung bei erhöhter Temperatur, wenn der Kunststoff so weich ist, daß er unter dem Einfluß dieses Druckes die Füllstoffpartikeln umfließen und mit ihren Oberflächenunebenheiten sich innig verbinden kann.

Die Verwendung geblähten und in bestimmter Richtung gepreßten Graphits als Füllstoff in einer Kunststoffmatrix konnte nicht dadurch nahegelegt werden, daß die elastischen Eigenschaften solchen Graphitmaterials von solchen Flachdichtungen bekannt sind, die im wesentlichen nur aus diesem Graphitmaterial bestehen. Man mußte nämlich annehmen, daß die vollständige Einhüllung der Graphitpartikeln durch den Kunststoff diese ihrer elastischen Wirkung berauben würde. In der Tat tritt diese Wirkung teilweise ein. Es verbleibt aber noch ein beträchtlicher Rest an Elastizitätswirkung, der die Gesamteigenschaften des Produkts in wertvoller Weise über diejenigen der vergleichbaren Produkte auf PTFE-Basis hinaushebt. Außerdem ist auch schon die Nachgiebigkeit des Produkts von großem Wert, die dadurch erzielt wird, daß die Füllstoffpartikeln unter verhältnismäßig geringem Druck von dem Kunststoff eingeschlossen werden können und daher ein großes, poröses Eigenvolumen behalten, das dem Produkt eine hohe Kompressibilität verleiht.

Zweckmäßigerweise wird die Pressung während des Sinterns ausgeübt, also in der üblicherweise verwendeten Temperaturspanne oberhalb 320° und vorzugsweise oberhalb 360°, in der der Kunststoff verhältnismäßig leicht formbar ist. Dabei wird der Druck - abhängig von der Formbarkeit des Kunststoffs und in Wechselwirkung mit der Einwirkungsdauer - so gewählt, daß der gewünschte Grad der Einschließung der Partikeln, die gewünschte Porenfreiheit und die gewünschte Dichte erreicht werden.

Der Druck kann gerichtet ausgeübt werden, beispielsweise bei einem Flachdichtungsmaterial quer zur Dichtungsebene, um dadurch die Partikeln quer zur Preßrichtung flachzudrücken und dadurch eine gewünschte Struktur des Materials zu erzielen. Nach einem anderen Merkmal der Erfindung kann die Pressung jedoch auch ungerichtet ausgeübt werden, indem das Gemisch ohne Kompression oder mit nur geringer Kompression in eine geschlossene Form gegeben und darin unter seinem Eigendruck gesintert wird. Unter dem Eigendruck ist der Druck zu verstehen, der sich in der geschlossenen Form entwickelt, wenn sich das Material unter dem Einfluß der steigenden Temperatur, insbesondere oberhalb von 320°, dehnt. Damit die Dehnung des Materials für die Druckausübung voll genutzt wird, wird das Gemisch zweckmäßigerweise mit einer Temperatur in die Form gegeben, die unterhalb desjenigen Temperaturbereichs liegt, in welchem die Volumendehnung hauptsächlich stattfindet. Man erzielt auf diese Weise ein Produkt, in welchem die Partikeln weitgehend ungerichtet enthalten sind und das deshalb weitgehend isotrope Eigenschaften aufweist. Selbstverständlich lassen sich je nach Verfahrensführung Zwischenstufen zwischen ausschließlich gerichteter Pressung und ungerichteter Druckausübung erzielen, nämlich beispielsweise durch eine mehr oder weniger geringe Vorpressung des Materials bei später ungerichteter Druckausübung oder durch eine gerichtete Kraftausübung auf bewegliche Formteile, beispielsweise durch deren Eigengewicht, durch Federkraft oder durch periodische Nachstellung eines Formdeckels während des Sinterns mit vorzugsweise geringer Kraft.

Es ist üblich, das Sintern von PTFE-Artikeln durch sorgfältig gesteuerte, langsame, stufenweise Erwärmung einzuleiten und auch ebenso langsam bzw. stufenweise abzukühlen. Überraschenderweise hat sich gezeigt, daß bei der Durchführung des erfindungsgemäßen Verfahrens die Temperaturerhöhung und ggf. auch die Abkühlung rasch stattfinden können, ohne daß dies sich qualitätsmindernd auf das Produkt auswirkt. Dies ist für die Wirtschaftlichkeit des Verfahrens von ausschlaggebender Bedeutung.

Die hohe Nachgiebigkeit des erfindungsgemäß erzeugten Produkts spiegelt sich in seinem vergleichsweise geringen spezifischen Gewicht, das vorzugsweise nicht höher als 1,9 g/cm³, zweckmäßigerweise unter 1,4 g/cm³ und in vielen Fällen unter 1,0 oder gar 0,8 g/cm³ liegt. Die Pressung wird so eingestellt, daß sich das gewünschte spezifische Gewicht ergibt.

Der auf das Endprodukt bezogene Füllstoffanteil ist zweckmäßigerweise nicht größer als 50 Gew.-%, im allgemeinen unter 25 Gew.-% und bei sehr zweckmäßigen Ausführungen unter 15 Gew.-%. Vorteilhafterweise liegt er über 3 und insbesondere über 7 Gew.-%, obwohl auch Füllstoffanteile unter dem angegebenen Mindestwert zu wertvollen Produkten führen können.

3

Expandierter Graphit hat sich im Rahmen der Erfidung als besonders vorteilhaft erwiesen. Jedoch führt auch expandierter Glimmer bzw. andere expandierte, blattstrukturierte Silikate (beispielsweise geblähter Vermiculit) zu wertvollen Ergebnissen. Wenn im Zusammenhang der Erfindung vereinfachend von Graphit gesprochen wird, so soll damit im allgemeinen stellvertretend auch expandiertes Silikat gemeint sein.

Das Merkmal, daß die Teilchen im wesentlichen vollständig von dem Fluorkunststoff umhüllt sind, besagt, daß der Fluorkunststoff vorzugsweise weitgehend porenfrei ist und die Partikeln darin überwiegend im wesentlichen vollständig gekammert sind. Dies schließt nicht aus, daß nach den Gesetzen der Zufälligkeit hier und dort einzelne Füllstoffpartikeln in unmittelbarer Verbindung miteinander stehen. Dies hängt auch weitgehend von der Mischungsqualität, von der Größe und Gestalt der Ausgangsprodukte sowie von dem Mischungsverhältnis ab, das vorzugsweise nicht mehr als 50 Vol-% Füllstoff enthält. Wenn die Füllstoffpartikeln ebenso wie die Kunststoffpartikeln vor dem Sintern sehr klein sind, erzielt man eine vollständigere Einhüllung der Füllstoffpartikeln und im allgemeinen auch ein höherwertiges Produkt; jedoch wird es in manchen Fällen erwünscht sein, den Aufwand durch Verwendung gröberer Partikeln und einer weniger intensiven Mischung zu senken.

Der Fluorkunststoff besteht zweckmäßigerweise aus Polytetrafluorethylen mit einem Anteil an schmelzbaren, hochtemperaturbeständigen Kunststoffen, vorzugsweise schmelzbaren Fluorkunststoffen wie Polyfluorethylenpropylen (FEP) sowie vorzugsweise Polyperfluoralkoxy (PFA). Diese schmelzbaren Fluorkunststoffe können als Gemisch mit Polytetrafluorethylen vorliegen, mit Tetrafluorethylen kopolymerisiert sein oder den Fluorkunststoff allein (ohne PTFE) bilden. Jedoch können die thermoplasischen Fluorkunststoffe auch ersetzt werden durch beispielsweise Polyamidimide, Polyimide und Polyetheretherketone, die bei der Sintertemperatur von PTFE, die im allgemeinen zwischen 360 und 380° liegt, beständig sind.

Die mittlere Partikelgröße liegt zweckmäßigerweise zwishen 0,1 und 0,5 mm.

Beispiel:

250g des von der Firma Hoechst AG unter der Bezeichnung TFM 1700 vertriebenen, pulverförmigen modifizierten PTFE mit einer unregelmäßigen, mittleren Teilchengröße von 0,02 mm und einem Verdichtungsverhältnis von 5,5 : 1 wurden mit 25 g des von der Firma SIGRI Elektrographit GmbH unter der Bezeichnung "Sigraflex fein" in einer Schlagmühle (IKA-Universal-Mühle M 20) während 30 Sek. gemischt. Die Schüttdichte der Mischung betrug 350 g/L (DIN 53468).

Die Mischung wurde in eine Form mit ebenem Boden von 300 mm Durchmesser und zylindrischem Rand von 15 mm Höhe gefüllt und bündig mit dem Rand glattgestrichen. Die Füllmenge betrug etwa 250 g. Ein ebener, in den zylindrischen Rand passender Deckel wurde aufgelegt und mittels am Umfang verteilter Schrauben mit geringer Kraft (Handkraft) unter Einfügung von Distanzstücken soweit angezogen, daß die Höhe des verbleibenden Formraums 5,5 mm betrug. Die Form wurde anschließend nach rascher Aufheizung 4 Stunden bei 380° C im Heizschrank gehalten und anschließend an der Luft abgekühlt.

Die sich ergebende Flachdichtung hatte einen Durchmesser von 285 mm und eine Dicke von 4 mm und folgende physikalischen Eigenschaften:

| | |
|---|---|
| Dichte: | $1,00$ g/cm$^3$ |
| Reißfestigkeit: | $4,5$ N/mm$^2$ |
| Reißdehnung: | 40 % |
| Härte: | 83 bis 88 Shore A |
| Gasdurchlässigkeit: | undurchlässig bei Dichtpressung 40 N/mm$^2$ zwischen Flanschen |

Ein großer Vorteil des erfindungsgemäßen Verfahrens besteht darin, daß das Material ausschließlich in pulverförmigem beziehungsweise in fertig gesintertem Zustand vorkommt; vorgepreßte Rohlinge, die bei geringer Dicke und großen Flächenabmessungen sehr bruchanfällig sein würden, kommen nicht vor.

Wegen seiner Nachgiebigkeit ist das erfindungsgemäß hergestellte Material hauptsächlich für Flachdichtungen und nicht dynamisch beanspruchte Packungen geeignet. Bei geringeren Anforderungen an Verschleißfestigkeit kann es wegen seiner Elastizität aber auch für dynamische Dichtungen benutzt werden.

EP 0 268 958 B1

Die zusätzliche Vervendung anderer Füllstoffe als der erwähnten ist möglich, wenn auch in vielen Fällen unzweckmäßig.

## Ansprüche

1. Verfahren zur Herstellung eines Dichtungsmaterials, insbesondere für Flachdichtungen, aus einem nachgiebigen Fluorkunststoff mit einem Gehalt von nicht mehrals 50 Gew.-% an porenbildendem, teilchenförmigem Füllstoff, dadurch gekennzeichnet, daß als Füllstoff ein Expandat von Graphit oder blattstrukturiertem Silikat verwendet wird und die nicht oder nur schwach vorgepreßte Mischung erwärmt und im erweichten Zustand des Kunststoffs auf eine Dichte von nicht mehr als 1,9 g/cm$^3$ gepreßt wird.

2. Verfahren nach Anspruch 1, dadurch gekennzeichnet, daß das Gemisch ohne oder mit nur geringer Kompression in eine geschlossene Form gegeben und darin unter seinem Eigendruck gesintert wird.

3. Verfahren nach Anspruch 1, dadurch gekennzeichnet, daß eine Pressung verwendet wird, die zu einem spezifischen Gewicht des Produkts von nicht mehr als 1,4 g/cm$^3$ führt.

4. Verfahren nach Anspruch 3, dadurch gekennzeichnet, daß eine Pressung verwendet wird, die zu einem spezifischen Gewicht des Produkts von nicht mehr als 1,0 g/cm$^3$ führt.

5. Verfahren nach Anspruch 4, dadurch gekennzeichnet, daß eine Pressung verwendet wird, die zu einem spezifischen Gewicht des Produkts von nicht mehr als 0,8 g/cm$^3$ führt.

6. Verfahren nach Anspruch 1, gekennzeichnet durch eine Füllstoffmenge von nicht mehr als 50 Vol.-%.

7. Verfahren nach Anspruch 1, gekennzeichnet durch eine Füllstoffmenge von nicht mehr als 15 Gew.-%.

8. Verfahren nach Anspruch 7, gekennzeichnet durch eine Füllstoffmenge von mehr als 3 Gew.-%.

9. Verfahren nach Anspruch 7, gekennzeichnet durch eine Füllstoffmenge von mehr als 7 Gew.-%.

10. Dichtung, insbesondere Flachdichtung, aus einem nachgiebigen Fluorkunststoff mit einem Gehalt von nicht mehr als 50 Gew.-% an porenbildendem Füllstoff, dadurch gekennzeichnet, daß der Füllstoff ein Expandat von Graphit oder blattstrukturiertem Silikat ist, dessen Teilchen von dem Kunststoff im wesentlichen porenfrei umhüllt sind und eine im wesentlichen ungerichtete Gestalt und Verteilung der Füllstoffteilchen haben, und daß das spezifische Gewicht des Materials unter 1,9 g/cm$^3$ liegt.

11. Dichtung nach Anspruch 10, dadurch gekennzeichnet, daß das spezifische Gewicht des Materials unter 1,4 g.cm$^3$ liegt.

12. Dichtung nach Anspruch 11, dadurch gekennzeichnet, daß das spezifische Gewicht des Materials unter 1,0 g/cm$^3$ liegt.

13. Dichtung nach Anspruch 12, dadurch gekennzeichnet, daß das spezifische Gewicht des Materials unter 0,8 g/cm$^3$ liegt.

## Claims

1. A method of producing a sealing material, in particular for flat seals, comprising a resilient fluorine plastics material with a content of not more than 50 % by weight of pore-forming particulate filler, characterised in that an expandate of graphite or foliated silicate is used as the filler and the mixture, which has not been previously compressed or only slightly, is heated and in the softened state of the plastics material is compressed to a density of not more than 1.9 g/cm$^3$.

5

2. A method according to Claim 1, characterised in that the mixture is introduced into a closed mould without or under only slight compression and is sintered therein under its own pressure.

3. A method according to Claim 1, characterised in that a pressure is applied which results in a mass density of the product of not more than 1.4 g/cm$^3$.

4. A method according to Claim 3, characterized in that a pressure is applied which results in a mass density of the product of not more than 1.0 g/cm$^3$.

5. A method according to Claim 4, characterized in that a pressure is applied which results in a mass density of the product of not more than 0.8 g/cm$^3$.

6. A method according to Claim 1, characterized by an amount of filler of not more than 50 % by volume.

7. A method according to Claim 1, characterized by an amount of filler of not more than 15 % by weight.

8. A method according to Claim 7, characterised by an amount of filler of more than 3 % by weight.

9. A method according to Claim 7, characterised by an amount of filler of more than 7 % by weight.

10. A seal, in particular a flat seal, in particular a flat seal, formed of a resilient fluorine plastics material with a content of not more than 50 % by weight of pore-forming filler, characterised in that the filler is an expandate of graphite or foliated silicate, the particles of which are enveloped in a substantially pore-free manner by the plastics material and the filler particles have a substantially random shape and distribution, and in that the mass density of the material is below 1.9 g/cm$^3$.

11. A seal according to Claim 10, characterised in that the mass density of the material is below 1.4 g/cm$^3$.

12. A seal according to Claim 11, characterised in that the mass density of the material is below 1.0 g/cm$^3$.

13. A seal according to Claim 12, characterised in that the mass density of the material is below 0.8 g/cm$^3$.

## Revendications

1. Procédé de fabrication d'un materiau d'étanchéité, en particulier pour des joints plats, en une matière plastique fluorée souple ayant une teneur ne dépassant pas 50% en poids de matière de charge porogène particulaire, caractérisé en ce qu' on utilise comme matière de charge un produit d'expansion de graphite ou de silicate à structure lamellaire, on chauffe le mélange sans le comprimer au préalable ou en ne le comprimant que faiblement, puis on le comprime, à l'état ramolli de la matière plastique, à une masse volumique ne dépassant pas 1,9 g/cm$^3$.

2. Procédé selon la revendication 1, caractérisé en ce que le mélange est introduit, sans compression ou avec une faible compression seulement, dans un moule ferme et il y est fritté sous l'effet de sa propre pression.

3. Procédé selon la revendication 1, caractérisé en ce qu' on applique une compressian qui donne un poids volumique du produit ne dépassant pas 1,4 g/cm$^3$.

4. Procédé selon la revendication 3, caractérisé en ce qu' on applique une compression qui donne un poids volumique du produit ne dépassant pas 1,0 g/cm$^3$.

5. Procédé selon la revendication 4, caractérisé en ce qu' on applique une compression qui donne un poids volumique du produit ne dépassant pas 0,8 g/cm$^3$.

6. Procédé selon la revendication 1, caractérisé par une quantité de matière de charge qui ne dépasse pas 50% en volume.

7. Procédé selon la revendication 1, caractérisé par une quantité de matière de charge qui ne dépasse pas 15% en poids.

8. Procédé selon la revendication 7, caractérisé par une quantité de matière de charge de plus de 3% en poids.

9. Procédé selon la revendication 7, caractérisé par une quantité de matière de charge de plus de 7% en poids.

10. Joint d'étanchéité, en particulier joint plat, en une matière plastique fluorée souple ayant une teneur ne dépassant pas 50% en poids de matière de charge porogène particulaire, caractérisé en ce que la matière de charge est un produit d'expansion de graphite ou de silicate à structure lamellaire dont les particules sont engainées pratiquement sans pores par la matière plastique et ont une forme et une distribution pratiquement non dirigées des particules de matière de charge, et en ce que le poids volumique du matériau se situe au-dessous de I,9 g/cm$^3$.

11. Joint d'étanchéité selon la revendication 10, caractérisé en ce que le poids volumique du matériau se situe au-dessous de 1,4 g/cm$^3$.

12. Joint d'étanchéité selon la revendication 11, caractérisé en ce que le poids volumique du matériau se situe au-dessous de 1,0 g/cm$^3$.

13. Joint d'étanchéité selon la revendication 12, caractérisé en ce que le poids volumique du matériau se situe au-dessous de 0,8 g/cm$^3$.